# EUROPEAN PATENT SPECIFICATION

(11) **EP 3 198 890 B1**
(45) Date of publication and mention of the grant of the patent: **07.11.2018**
(21) Application number: 14781830.6
(22) Date of filing: 23.09.2014
(51) Int. Cl.: H04R 25/00

(54) **AN IMPRESSION-TAKING PAD, A METHOD OF IMPRESSION-TAKING, AN IMPRESSION, A METHOD OF MANUFACTURING A CUSTOM EAR CANAL SHELL**
ABDRUCKNAHMEKISSEN, VERFAHREN ZUR ABDRUCKNAHME, ABDRUCK UND VERFAHREN ZUR HERSTELLUNG EINER INDIVIDUELL ANGEPASSTEN GEHÖRGANGSCHALE
TAMPON DE PRISE D'EMPREINTE, PROCÉDÉ DE PRISE D'EMPREINTE, EMPREINTE, PROCÉDÉ DE FABRICATION D'UNE COQUE INTRA-AURICULAIRE PERSONNALISÉE

(43) Date of publication of application: 02.08.2017
(73) Proprietor: Sonova AG, 8712 Stäfa (CH)
(72) Inventor: KARAMUK, Erdal, 8708 Männedorf (CH); OATMAN, Natasha, 8004 Zürich (CH); SCHWARZLOS, Jana-Kosima, 8712 Stäfa (CH)
(74) Representative: Troesch Scheidegger Werner AG
(86) International application number: PCT/EP2014/070270
(87) International publication number: WO 2016/045709

(56) References cited:
- EP-A2- 0 533 258
- WO-A1-2010/107364
- US-A- 3 440 314
- US-A1- 2006 050 914
- US-B1- 7 092 543

## Description

### TECHNICAL FIELD

The present invention is related to an impression-taking pad used for impression-taking of an ear canal, a method of impression-taking of an ear canal, an impression, a method of manufacturing a custom ear canal shell.

### BACKGROUND OF THE INVENTION

Hearing devices are typically small ear-level devices used to improve the hearing capability of hearing impaired people. This is achieved by picking up the surrounding sound with a microphone of a hearing device, processing the microphone signal thereby taking into account the hearing impairment of the user of the hearing device and providing the processed sound signal into an ear canal of the user via a miniature loudspeaker, commonly referred to as a receiver.

Hearing devices comprise shells used to conform to the ear canal geometry. Therefore, at the beginning of each custom product production for the human ear, an impression of the ear canal geometry is needed. If the quality of the impression is not sufficient, i.e. the hearing device shell does not proper conform to the ear canal geometry, for the ordered custom product, production thereof in the desired size or quality is very hard or rather impossible. In this case the impression has to be redone, resulting in increased costs and increased time required for a further impression-taking. A further disadvantage relies in that repeated impression-taking is inconvenient for the customer as well as the audiologist.

Further, in the prior art, a problem in impression-taking relies in that the impression surface is neither neat nor complete. In various cases an impression-taking lacks the ability of complete reproduction of the concha and the sealing zones Tragus, Antitragus and aperture plane. One of the main problems in impression-taking is the incomplete reproduction of the ear canal beyond the second bend, at least 2mm beyond the second bend. Due to this incomplete reproduction, important information about the ear canal features get lost. The portion of the ear canal beyond the second bend is called the bony part. This bony part is overlaid by a layer of skin having a thickness of as small as 0.2mm. Due to this very thin skin layer, this region of the ear canal is very sensitive to applied pressure. Further, injuries heal very poorly in this region. Nevertheless, an impression which does not extend to or rather beyond the second bend and in the bony part is insufficient for every custom product. Due to this insufficient length, information is missing required by the modeler to attain the best fit of the product. Further, information is missing required by the modeler in order to attain perfect positioning and alignment of the sound output of the hearing device.

Current impression-taking methods do not provide safe process to take impressions of the ear canal with a controlled ear impression length. This is a problem, since in Invisible-in-Canal (IIC) hearing devices the ear canal should be casted as long and deep as possible in order to provide the best fit for the customer into the ear canal. Since the Invisible-in-Canal hearing device is placed as deep as possible in an ear canal, a hearing device modeler needs to know every detail of the ear canal, which is refused in case of poor impression-taking.

Solutions are known in which one of various impression pads, different in shapes and sizes, is inserted into the ear canal used for impression-taking. The most popular material for these impression pads is foam, for example open porous polymer foam. Further, impression pads made of cotton are known. The impression pads made of foam are used to prevent that liquid impression-taking material reaches the eardrum. However, in the prior art, the foam does not connect well to the impression taking material resulting in holes can emerge between the foam and the impression taking material. Due to this, problems arise in that important information about ear canal features gets lost.

A further problem relies in that standard foam pads are uncomfortable. For example, the foam pads often crackle in the ear canal which is uncomfortable to the customer. As a result, the impression length could suffer. Another problem is that the standard foam pad often has to be cut back in order to fit perfectly into the human ear canal. However, this cutting-back is time-consuming and costly. Another problem in using foam pads is that the foam pads expand after the impression is taken. Hence, accurate geometric information about the ear canal gets lost once more. In other words, the foam pad portion does not provide accurate geometric information concerning the corresponding ear canal portion.

Document DE 10 2012 201 216 A1 describes a foam tip comprising a soft polyurethane foam. Further impression-taking methods are disclosed in EP 0 533 258 B1 and WO 2010/107364 A1. A problem in the state of the art is that impression-taking quality is too bad leading to the necessity to repeat the impression-taking procedure. Further, in the prior art, impressions are too short, which renders the impressions insufficient for accurate custom product production. A problem resulting from a too short impression is that the modeler has to guess the pathway of the complete ear canal. A further problem is that the modeler is not provided with information about the sound output direction, which often results in that the modeler has to guess the sound output direction, too. US7092543 describes an impression taking pad in foam material which does not have to be removed from the impression in preparation to the scan process.

It is therefore an object of the present invention to provide an impression-taking pad solving the problems mentioned above.

### SUMMARY OF THE INVENTION

The present invention is directed to an impression-taking pad used for impression-taking of an ear according to claim 1, said impression-taking pad comprises an elastic body having a hollowed dome-shaped contour, wherein the inner surface comprises axially aligned scallops. The inventive impression-taking pad is advantageous in that the shape thereof is fixed once the impression-taking material (injection material) is cured. The hollowed dome-shaped contour allows proper entrance of the impression-taking material. Hence, the impression-taking pad provides exact information about geometry of the ear canal. Therefore, the inventive impression-taking pad, once scanned together or rather along with the impression, provides the hearing device shell modeler with required information about the user's ear canal anatomy. Compared to commonly known impression pads, the surface of the inventive impression-taking pad along with the impression is completely scannable. Therefore, advantageously, the inventive impression-taking pad does not have to be removed from the impression in preparation of the scan process.

The hollowed dome-shaped contour in combination with the axially aligned scallops at its inner surface allow the impression-taking pad to optimally comply with the individual ear canal shape. In other words, the scallop structure axially aligned along the inner surface, advantageously provides even pressure distribution and conformity with the ear canal wall. A further advantage relies in that the scallop structure on the inner surface provides increased specific surface area, which increased surface area in turn allows improved bonding to the impression-taking material. In addition to this, the inventive impression taking pad is available in different sizes in order to cover all different ear canal sizes.

In an embodiment of the proposed impression-taking pad, the outer surface comprises a smooth material. The smooth outer surface allows to comply with the ear canal skin. The smooth outer surface in combination with the inner scallop structure allows the impression-taking pad to best conform to the geometry of the ear canal without causing any wrinkles. The improved conformity prohibits any liquid impression-taking material to flow or rather to escape along the (sealing) impression-taking pad into the volume between the eardrum and the impression-taking pad. Hence, improved sealing is achieved.

In an embodiment of the proposed impression-taking pad, the dome-shaped contour is elliptic in cross-section. This elliptic cross-section improves even pressure distribution in order to more even force the elastic body against the ear canal skin.

In an embodiment of the proposed impression-taking pad, the inner surface material comprises a larger contact area than the outer surface material. The impression-taking pad is given a combination of an outer surface having a smooth structure to comply with the ear canal skin and an inner surface having a macroscopic structure given by the scallops and a microscopic structure given by the nature of the foam used to manufacture the pad. This combination allows to achieve a high quality impression.

In further embodiments of the proposed impression-taking pad, the inner surface material comprises porous material, in particular foam. The highly porous nature of foam ensures a very high compliance and good conformity to the ear canal wall. The microscopic open porosity ensures that the impression material can be proper engaged by a large contact area. Hence, the porous material of the inner surface improves bonding of the impression-taking material to the impression-taking pad by means of mechanical interlocking as liquid impression-taking material flows into the porosities and is cured afterwards. The impression-taking material - once cured - retains the impression-taking pad in its deformed position. Therefore, the impression-taking pad does not have to be removed in preparation of the scanning process. The new impression-taking pad perfectly merges with the impression-taking material and an integral, smooth surface, free of transitions, emerges therefrom. Hence, additional information about the contour of the ear canal can be provided allowing for best reproducibility of the ear canal.

In further embodiments, the proposed impression-taking pad further comprises an interface part adapted to be connected with at least one of an insertion tool, a removal yarn and a ventilation tube. This feature allows for connection of a removal yarn serving as a removal safety feature. For example, the yarn can be thread through an aperture provided to the interface part. The same applies to the ventilation tube. Additionally, the interface part is adapted to provide a solid handle for an insertion tool in order to guarantee a safe, controlled and easy ingress into the ear canal. Hence, softly pushing the impression-taking pad even beyond the second bend of the ear canal can be handled easily. The impression-taking pad and the handle can be formed integrally. In this case, the handle can be made as soft as the impression-taking pad.

In an exemplary embodiment, the removal yarn can be made integral with the ventilation tube. In this case, the removal yarn can be molded into the material of the ventilation tube, fixedly aligned to the axial direction thereof. This feature allows to more stiffen the ventilation tube in axial direction thereof. Therefore, advantageously, stretching or rather extending of the ventilation tube can be prevented in the course of drawing-out the impression-taking pad out of the ear canal. This feature allows to combine two functions resulting in an easy and simple configuration as well as in reduced costs.

In further embodiments of the proposed impression-taking pad, the interface part is connected to the distal end of the inner surface. The interface part can be formed integrally with the material of the impression-taking pad. Alternatively, the interface part can be formed separately from the impression-taking pad and can be connected therewith, for example by adhesive bonding.

In further embodiments, the proposed impression-taking pad further comprises a flat plane at the medial distal end of the outer surface. This flat plane allows to proper identify the sound outlet plane of the scanned impression-taking pad. This information is very helpful for the modelling process of the custom hearing device shell in order to be able to optimally direct or rather align the sound outlet.

Moreover, the present invention is directed to a method of impression-taking of an ear canal by means of an impression-taking pad according to one of claims 1 to 8, the method comprising: inserting the impression-taking pad into the ear canal; filling impression-taking material into the ear canal such to fill the ear canal in addition to the hollowed part of the impression-taking pad; curing the filled impression-taking material; and removing the cured impression from the ear canal.

The method of impression-taking according to claim 9 allows to obtain an improved impression of the ear canal having a neat, complete and continuous impression surface allowing to achieve a complete reproduction of the ear canal and/or concha. Further, the inventive method allows for a complete reproduction of the ear canal even beyond the second bend.

In an embodiment of the proposed method of impression-taking the insertion step comprises placing the impression-taking pad a predetermined distance from the tympanic membrane. Therefore, a complete reproduction of the ear canal as long and as deep as possible can be provided. Hence, the hearing device modeler is provided with every detailed information about the ear canal geometry permitting the modeler to produce a hearing device shell exhibiting best fit into the ear canal.

In further embodiments, the proposed method of impression-taking further comprises a step of measuring the ear canal length before the inserting step. Therefore, an impression is provided facilitating a reproduction of the ear canal as deep as possible in high quality.

Moreover, the present invention is directed to an impression according to claim 12 comprising an impression-taking material and an impression-taking pad according to one of claims 1 to 8, adhered to the impression-taking material by curing during deep insertion into the ear canal. The obtained impression exhibits the advantages of the proposed impression-taking pad.

Moreover, the present invention is directed to a method of manufacturing a custom ear canal shell, according to claim 13, said method exhibiting the advantages of the proposed impression. The proposed method of manufacturing a custom ear canal shell comprises: scanning the impression according to claim 12, said impression including the impression-taking pad, by means of an impression scanner resulting in ear canal impression model data; and manufacturing the custom ear canal shell by means of at least one subtractive and/or additive production step using the ear canal impression model data.

It is expressly pointed out that any combination of the above-mentioned embodiments is subject of further possible embodiments within the scope defined by the appended claims. Only those embodiments are excluded that would result in a contradiction.

### BRIEF DESCRIPTION OF THE DRAWINGS

The present invention is further described with reference to the accompanying drawings jointly illustrating various exemplary embodiments, which are to be considered in connection with a following detailed description. What is shown in the Figures is the following:
- Figures 1A-C: depict an impression-taking pad according to the invention in different views;
- Figure 2: is a schematically cross-section view showing the impression-taking pad surface;
- Figure 3: is a schematically view showing the impression-taking pad positioned inside an ear canal;
- Figures 4A-B: are schematically views showing an impression obtained according to the present invention; and
- Figures 5A-B: depict impressions obtained according to the prior art.

In order to allow for manufacturing of a best fitting shell of a hearing device for proper insertion into the human ear canal, a high quality impression of said ear canal is required. Should the quality of the impression be insufficient, information is missing which is required to produce the hearing device shell in the desired size and quality for best fitting. An insufficient impression results in the impression-taking procedure has to be repeated which produces high costs in terms of material and time and which is inconvenient for the customer as well as the audiologist.

A conventional impression according to the prior art lacks the ability of a complete reproduction of the concha as well as the complete reproduction of the ear canal, in particular beyond the second bend. A further problem is that common impression-taking pads lack the complete reproduction of sealing zones Tragus, Antitragus and aperture plane.

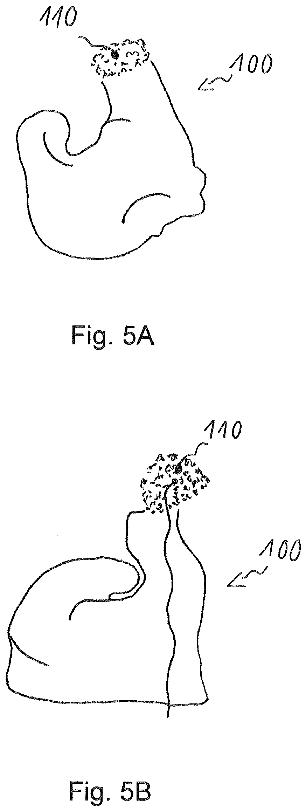

Figures 5A-B show conventional impressions 100 obtained according to the prior art. In the state of the art, in order to acquire the impressions 100, a standard impression pad 110 comprising polymer foam is positioned inside an ear canal. In a further step, liquid impression-taking material is filled into the ear canal. A problem in the prior art is that, after curing of the liquid impression-taking material, the foam 110 often lacks the ability to proper connect to the impression-taking material. Resulting from this inability, holes (refer to portions encircled in the drawings) can emerge between the foam 110 and the impression-taking material. Due to this, important information about the ear canal features in this region gets lost.

Figure 5A shows an impression 100 according to the prior art, which extension is too short since it does not extend beyond the second bend of the ear canal. This impression demonstrates the shortage of the prior art with respect to insufficient length. The example shown in Figure 5A is not suitable to completely reproduce the ear canal beyond the second bend.

While the impression 100 as shown in Figure 5B may allow for reproduction of the ear canal beyond the second bend, this reproduction is nevertheless too short as well. Further, the pathway of the ear canal cannot be reproduced proper due to the shortage of the impression 100. In the prior art, the modeler of a hearing device shell often has to guess the best way of the ear canal as well as the sound output direction which is unsatisfactory.

Further, in the prior art, customers often object that the insertion of prior art foam pads 110 is uncomfortable and the foam would crackle in the ear canal. A further disadvantage of the foam pads 110 in the state of the art is the requirement that the foam has to be cut back to provide a good adaptation to the ear canal. This work is time and material consuming. Standard impression pads 110 according to the prior art need to be inserted with a sturdy illuminated bar. Hence, insertion is difficult and can result in injuries. Further, the insertion depth is vague and often depends on the decision of the audiologist. An additional disadvantage of cotton or foam pads 110 is that they do not perfectly merge with the impression-taking material and gaps can occur at the transition area. Therefore they always have to be removed for the impression gets followed up and scanned.

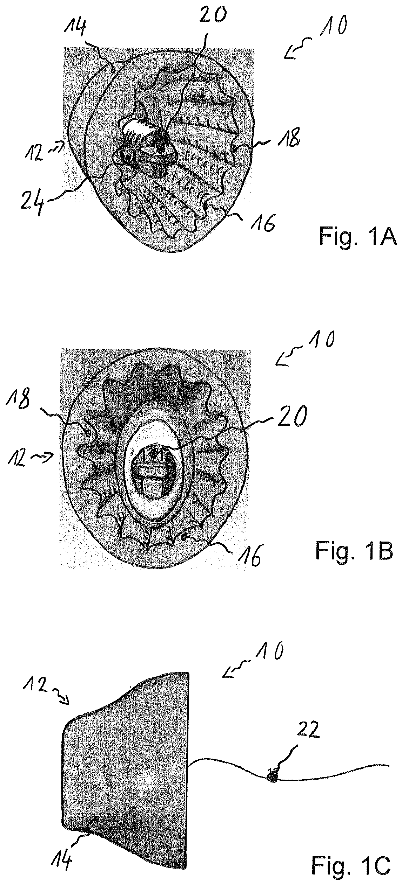

Figures 1A-C show different views of an impression-taking pad 10 according to the present invention. The impression-taking pad 10 comprises an elastic body 12 having a hollowed dome-shaped contour. The elastic body 12 comprises an outer surface 14 made of a smooth material. The elastic body 12 further comprises an inner surface 16 made of a material comprising a larger contact area than that of the outer surface 14. Further, the inner surface 16 comprises scallops 18 axially aligned in lengthwise direction of the elastic body 12. The material of the inner surface 16 comprises porous material, for example foam. The dome-shaped contour of the elastic body 12 is elliptic in cross-section. This allows optimized conformity with the ear canal wall. Further, the provision of said axially aligned scallops 18 advantageously provides an even pressure distribution and conformity with the ear canal wall. Furthermore, the scallop shape provides increased specific surface area for enhanced bonding to the impression-taking material. Since the inner surface 16 comprises porous material such as foam, a further improved bonding to the impression-taking material can be exhibited. Summarized, the inventive impression-taking pad 10 advantageously provides a combination of a smooth outer surface 14 to comply with the ear canal skin and an inner surface 16 having a macroscopic structure given by the scallops 18 as well as a microscopic structure given by the nature of the porous material, for example foam.

The outer surface 14 in combination with the inner scallops 18 provides an impression-taking pad 10 being allowed to conform to the geometry of the ear canal without causing any wrinkles. In addition to this, the inventive impression-taking pad 10 is available in different sizes in order to comply with all different ear canal sizes. By way of preventing the impression-taking pad 10 to cause any wrinkles, the liquid impression-taking material is sealed against flowing along the impression-taking pad 10 and leaking into the volume between the eardrum and the impression-taking pad 10.

The impression-taking pad 10 further comprises an interface part 20 (refer to Figures 1A-B) adapted to be connected with an insertion tool (not shown). This agile interconnection allows the audiologist to safely place the impression-taking pad deeply into the ear canal by means of the insertion tool, for example a forceps tool. This allows for deep and safe insertion of the impression-taking pad 10 to a specified depth in the ear canal. The interface part 20 is also adapted to be connected with a removal yarn 22 (refer to Figure 1C). This removal yarn 22 can be threaded such to run through a penetrating aperture 24 formed into the interface part 20. The removal yarn 22 serves as removal safety, if necessary. For example, the removal yarn can be embodied by means of a ventilation tube (not shown).

In an exemplary embodiment, the removal yarn 22 can be made integral with the ventilation tube. For example, the removal yarn 22 is molded with the material of the ventilation tube. This feature allows to more stiffen the ventilation tube in axial direction thereof. Therefore, stretching of the ventilation tube can be prevented in the course of drawing-out the impression-taking pad 10 out of the ear canal. This feature allows to combine two functions resulting in an easy and simple configuration as well as in reduced costs as a whole.

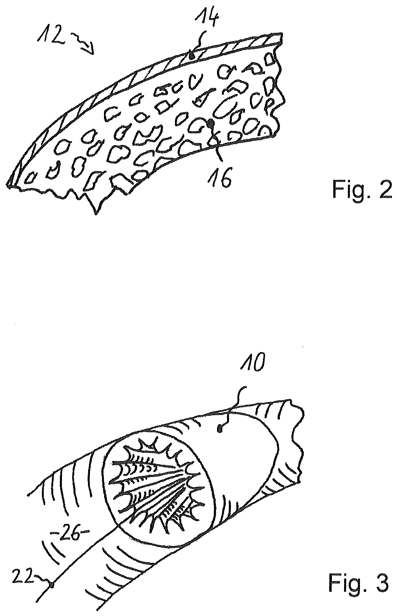

Figure 2 shows an enlarged cross sectional view of the elastic body 12 of the impression-taking pad taken along a plane perpendicular to the center axis thereof. The outer surface 14 of the elastic body 12 comprises a smooth material allowing to touch the thin-skinned ear canal wall of the customer very softly. The material of the inner surface 16 comprises porous material, in particular foam, comprising a larger contact area than that of the outer surface 14. This highly porous foam structure ensures good compliance and conformity with the ear canal wall. In other words, the open porosity ensures a large contact area providing enhanced engagement with the impression-taking material. This engagement feature in combination with the inner scallop structure (refer to Figures 1A-C) advantageously provides the ability to retain the impression-taking pad in its deformed position once the impression-taking material is cured. Further advantageously, additional information relating to the contour of the ear canal can be provided allowing to obtain a very good reproducibility.

Figure 3 shows the impression-taking pad 10 inserted into the ear canal 26 in a schematically view. The impression-taking pad 10 exhibits high compliance and exerts minimal pressure to the wall of the ear canal 26. Further, due to its conformity with the geometry of the wall of the ear canal 26, a tight seal is formed, preventing liquid impression-taking material leaking into the volume between the impression-taking pad 10 and the eardrum (not shown). This conformity with the ear canal 26 geometry is facilitated by the inner scallop structure of the dome-shaped impression-taking pad 10 allowing an even pressure distribution to the wall of the ear canal 26. Therefore, formation of any wrinkles is prevented, which otherwise could adversely cause liquid impression-taking material leaking into the volume between the impression-taking pad 10 and the ear drum. In addition to this, the inventive impression-taking pad is available in different sizes in order to cover all different ear canal sizes.

Additionally, the scallop structure forms a large surface area, which - once filled with the liquid impression-taking material and cured afterwards - keeps the impression-taking pad 10 in its deformed position for the moment it is needed to make a scan of the impression. It is to be noted that the impression comprises the cured impression-taking material as well as the impression-taking pad bonded to the impression-taking material.

An exemplary workflow for impression-taking of the ear canal can comprise steps as follows. In an initially step, the ear canal length is measured using a depth sizer. For example, the aperture plane can be used as reference. In a further step, the corresponding insertion length on an insertion tool is adjusted accordingly. Afterwards, a correct insertion taking pad 10 size can be identified. Further, a tight sealing of the impression-taking pad 10 around the wall of the ear canal 26 is verified via an otoscope. This step comprises a verification in order to ensure that the impression-taking pad 10 does not create any wrinkles. In case of tight sealing against the ear canal 26 wall cannot be assured due to wrinkles, for example, an impression-taking pad 10 of a different size should be selected and used. In a further step, the impression-taking pad 10 is placed a distance before the tympanic membrane. The distance between the distal end of the impression-taking pad 10 and the tympanic membrane can be 6mm, for example. The removal yarn 22 should be adhered during the impression-taking process. In a final step, impression-taking material, for example a silicone based impression material, is inserted or rather filled into the ear canal 26.

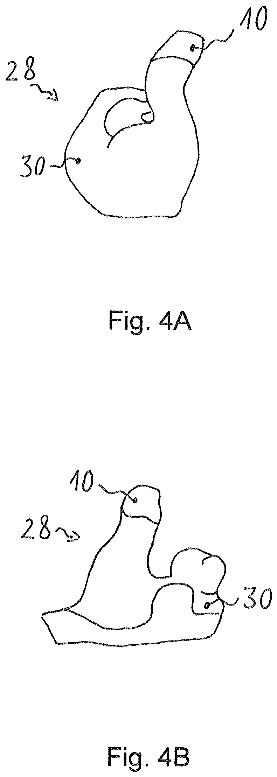

Figure 4 shows an impression 28 comprising cured impression-taking material 30 and the impression-taking pad 10 according to the present invention fixedly engaged with the cured impression-taking material 30. The impression 28 exhibits a perfect transition between surfaces of the impression-taking material 30 and the impression-taking pad 10. This allows the impression 28 to reproduce the ear canal completely by exhibiting a neat surface. Advantageously, the impression 28 is free of any holes between the impression-taking material 30 and the impression-taking pad 10 allowing to gather all important information relating to the ear canal anatomy. The inventive impression-taking pad 10 perfectly conjoins with the impression-taking material 30 seamlessly.

Due to the hollowed dome-shaped contour of the elastic body of the impression-taking pad 10 (refer to Figures 1A-B), the impression-taking material 30 perfectly occupies said hollowed contour without running into danger that liquid impression-taking material, during filling thereof into the ear canal, will flow past the impression-taking pad 10. Due to the flexibility and perfect connection between the impression-taking pad 10 and the impression-taking material 30, the exterior of the impression-taking pad 10 supplies additional information relating to the ear canal anatomy. Additionally and contrary to the prior art, the sound output direction can be determined in a high precision. Further, contrary to the prior art, the impression-taking pad 10 is left on the impression 28 after impression-taking by the acoustician.

Advantageously, the surface of the impression-taking pad 10 can be easily recognized by an impression scanner. Therefore, the hearing device manufacturer is able to produce a high quality custom ear canal shell by scanning the impression 28. This scanning results in precise ear canal impression model data. In a subsequent step, the custom ear canal shell can be manufactured by means of a subtractive and/or additive production step(s) using the ear canal impression model data. This allows to obtain a custom ear canal shell configured for deep insertion into the ear canal of the customer. The obtained custom ear canal shell can be used as a shell of a hearing device configured for example as Invisible-in-Canal hearing device for deep insertion into the ear canal. Advantageously, a plane at the medial distal end of the outer surface of the impression-taking pad 10 uniquely indicates the sound exit and orientation towards the tympanic membrane.

Hence, the obtained impression 28 extends deeper into the ear canal exhibiting more details. By means of information relating to the ear canal length as retrieved from length measurement before impression-taking, additional information can be gathered comprising the position of the sound output plane. Further, the residual volume of the ear canal can be determined exactly. Furthermore, due to the tight sealing between the impression-taking pad 10 and the wall of the ear canal, manufacturing of the impression 28 is safe. Therefore, repeated manufacturing procedures as known in the prior art can be omitted. This results in increased customer satisfaction as well as reduced costs.

## Claims

1. An impression-taking pad (10) used for impression-taking of an ear canal (26), said impression-taking pad (10) comprises an elastic body (12) having a hollowed dome-shaped contour adapted to be filled by an impression taking material via an opening and bonded to it, wherein the inner surface (16) comprises axially aligned scallops (18).

2. The impression-taking pad (10) according to claim 1,
wherein the outer surface (14) comprises a smooth material.

3. The impression-taking pad (10) according to claim 1 or 2, wherein the dome-shaped contour is elliptic in cross-section.

4. The impression-taking pad (10) according to one of the preceding claims, wherein the inner surface (16) material comprises a larger contact area than the outer surface (14) material.

5. The impression-taking pad (10) according to claim 4,
wherein the inner surface (16) material comprises porous material.

6. The impression-taking pad (10) according to one of the preceding claims, further comprising an interface part (20) adapted to be connected with at least one of an insertion tool, a removal yarn (22) and a ventilation tube.

7. The impression-taking pad (10) according to claim 6,
wherein the interface part (20) is connected to the distal end of the inner surface (16).

8. The impression-taking pad (10) according to one of the preceding claims, comprising a flat plane at the medial distal end of the outer surface (14).

9. A method of impression-taking of an ear canal (26) by means of an impression-taking pad (10) according to one of the preceding claims, the method comprising:
- inserting the impression-taking pad (10) into the ear canal (26);
- filling impression-taking material into the ear canal (26) such to fill the ear canal (26) in addition to the hollowed dome-shaped contour of the elastic body (12) of the impression-taking pad (10) ;
- curing the filled impression-taking material; and
- removing the cured impression (28) from the ear canal (26).

10. The method according to claim 9, wherein the insertion step comprises placing the impression-taking pad (10) a predetermined distance from the tympanic membrane.

11. The method according to claim 9 or 10, further comprising a step of measuring the ear canal (26) length before the inserting step.

12. An impression (28) comprising an impression-taking material and an impression-taking pad (10) according to one of claims 1 to 8, adhered to the impression-taking material by curing during deep insertion into the ear canal (26).

13. A method of manufacturing a custom ear canal shell, comprising:
- scanning the impression (28) according to claim 12, said impression (28) including the impression-taking pad (10), by means of an impression scanner resulting in ear canal impression model data; and
- manufacturing the custom ear canal shell by means of at least one subtractive and/or additive production step using the ear canal impression model data.

## Patentansprüche

1. Abdruckkissen (10) zur Abformung eines Gehörgangs (26), wobei das Abdruckkissen (10) einen elastischen Körper (12) mit einer hohlen, kuppelförmigen Kontur aufweist, ausgelegt um über eine Öffnung mit einem Abdruckmaterial gefüllt und hiermit verklebt zu werden, wobei die Innenfläche (16) axial ausgerichtete Scallops (18) umfasst.

2. Abdruckkissen (10) nach Anspruch 1, wobei die Aussenfläche (14) ein glattes Material umfasst.

3. Abdruckkissen (10) nach Anspruch 1 oder 2, wobei die kuppelförmige Kontur im Querschnitt elliptisch ist.

4. Abdruckkissen (10) nach einem der vorhergehenden Ansprüche, wobei das Material der Innenfläche (16) eine grössere Kontaktfläche als das Material der Aussenfläche (14) aufweist.

5. Abdruckkissen (10) nach Anspruch 4, wobei das Material der Innenfläche (16) poröses Material umfasst.

6. Abdruckkissen (10) nach einem der vorhergehenden Ansprüche, ferner umfassend ein Schnittstellenteil (20), ausgelegt um mit einem Einsetzwerkzeug, einem Abziehfaden (22) und/oder einem Belüftungsschlauch verbunden zu werden.

7. Abdruckkissen (10) nach Anspruch 6, wobei das Schnittstellenteil (20) mit dem distalen Ende der Innenfläche (16) verbunden ist.

8. Abdruckkissen (10) nach einem der vorhergehenden Ansprüche, umfassend eine flache Ebene am medialen distalen Ende der Aussenfläche (14).

9. Verfahren zur Abformung eines Gehörgangs (26) mittels eines Abdruckkissens (10) nach einem der vorhergehenden Ansprüche, wobei das Verfahren umfasst:
- Einführen des Abdruckkissens (10) in den Gehörgang (26);
- Füllen von Abdruckmaterial in den Gehörgang (26), um den Gehörgang (26) zusätzlich zu der hohlen, kuppelförmigen Kontur des elastischen Körpers (12) des Abdruckkissens (10) zu füllen;
- Aushärten des eingefüllten Abdruckmaterials; und
- Entfernen des ausgehärteten Abdrucks (28) aus dem Gehörgang (26).

10. Verfahren nach Anspruch 9, wobei der Schritt des Einführens ein Platzieren des Abdruckkissens (10) bei einem vorbestimmten Abstand vom Trommelfell umfasst.

11. Verfahren nach Anspruch 9 oder 10, ferner umfassend einen Schritt des Ausmessens der Länge des Gehörgangs (26) vor dem Schritt des Einführens.

12. Abdruck (28) umfassend ein Abdruckmaterial und ein Abdruckkissen (10) nach einem der Ansprüche 1 bis 8, das beim tiefen Einführen in den Gehörgang (26) durch Aushärten an das Abdruckmaterial angeklebt ist.

13. Verfahren zum Herstellen einer kundenspezifischen Gehörganghülle, umfassend:
- Abtasten des Abdrucks (28) nach Anspruch 12, wobei der Abdruck (28) das Abdruckkissen (10) umfasst, mittels eines Abdruckscanners, woraus Gehörgangabdruckmodelldaten resultieren; und
- Herstellen der kundenspezifischen Gehörganghülle mittels eines subtraktiven und/oder additiven Herstellungsschritts unter Verwendung der Gehörgangabdruckmodelldaten.

## Revendications

1. Tampon de prise d'empreinte (10) servant à prendre l'empreinte d'un conduit auditif (26), ledit tampon de prise d'empreinte (10) comprenant un corps élastique (12) ayant un contour en forme de dôme creux adapté pour être rempli d'un matériau de prise d'empreinte via une ouverture et raccordé à ce dernier, dans lequel la surface intérieure (18) comprend des dentelures (18) alignées dans le sens axial.

2. Tampon de prise d'empreinte (10) selon la revendication 1, dans lequel la surface extérieure (14) comprend un matériau souple.

3. Tampon de prise d'empreinte (10) selon la revendication 1 ou 2, dans lequel le contour en forme de dôme est elliptique en coupe transversale.

4. Tampon de prise d'empreinte (10) selon l'une des revendications précédentes, dans lequel le matériau de la surface intérieure (16) comprend une zone de contact plus grande que le matériau de la surface extérieure (14).

5. Tampon de prise d'empreinte (10) selon la revendication 4, dans lequel le matériau de la surface intérieure (16) comprend un matériau poreux.

6. Tampon de prise d'empreinte (10) selon l'une des revendications précédentes, comprenant en outre une partie d'interface (20) adaptée pour être raccordée à au moins un élément parmi un outil d'insertion, un fil de retrait (22) et un tube de ventilation.

7. Tampon de prise d'empreinte (10) selon la revendication 6, dans lequel la partie d'interface (20) est raccordée à l'extrémité distale de la surface intérieure (16).

8. Tampon de prise d'empreinte (10) selon l'une des revendications précédentes, comprenant un plan plat à l'extrémité distale médiale de la surface extérieure (14).

9. Procédé de prise d'empreinte d'un conduit auditif (26) au moyen d'un tampon de prise d'empreinte (10) selon l'une des revendications précédentes, le procédé consistant à :
- insérer le tampon de prise d'empreinte (10) dans le conduit auditif (26) ;
- remplir le matériau de prise d'empreinte dans le conduit auditif (26) de façon à remplir le conduit auditif (26) en plus du contour en forme de dôme creux du corps élastique (12) du tampon de prise d'empreinte (10) ;
- laisser durcir le matériau de prise d'empreinte rempli ; et
- retirer l'empreinte durcie (28) du conduit auditif (26).

10. Procédé selon la revendication 9, dans lequel l'étape d'insertion consiste à placer le tampon de prise d'empreinte (10) à une distance prédéterminée de la membrane tympanique.

11. Procédé selon la revendication 9 ou 10, comprenant en outre une étape consistant à mesurer la longueur du conduit auditif (26) avant l'étape d'insertion.

12. Empreinte (28) comprenant un matériau de prise d'empreinte et un tampon de prise d'empreinte (10) selon l'une des revendications 1 à 8, qui adhère au matériau de prise d'empreinte par durcissement lors de l'insertion profonde dans le conduit auditif (26).

13. Procédé pour fabriquer une coquille sur mesure pour le conduit auditif consistant à :
- scanner l'empreinte (28) selon la revendication 12, ladite empreinte (28) incluant le tampon de prise d'empreinte (10), au moyen d'un scanner d'empreinte pour obtenir des données de modèle d'empreinte du conduit auditif; et
- fabriquer la coquille sur mesure du conduit auditif au moyen d'au moins une étape de production soustractive et/ou additive à l'aide des données de modèle d'empreinte du conduit auditif.
